# EUROPEAN PATENT APPLICATION

(11) **EP 1 717 078 A2**
(43) Date of publication of application: **02.11.2006**
(21) Application number: 06007673.4
(22) Date of filing: 12.04.2006
(51) Int. Cl.: B60J 5/04

(54) **Door member for baffling, reinforcement or sealing**

(30) Priority: 28.04.2005 US 675581 P
(71) Applicant: L & L Products, Inc., Romeo, MI 48065 (US)
(72) Inventor: Stolarski, David, Shelby Twp. MI 48315 (US); Larsen, Douglas C., Highland MI 48357 (US); Richardson, John, Oakland Twp. MI 48306 (US)
(74) Representative: Bawden, Peter Charles

(57) **Abstract**

There is disclosed a member (10) for baffling, reinforcement or sealing. Typically, the member (10) includes a carrier member (12) and an activatable material (14) disposed upon the carrier member (12).

## Description

### CLAIM OF PRIORITY

This application claims the benefit of the filing date of U.S. Provisional Application Nos. 60/675,581 filed April 28, 2005.

### FIELD OF THE INVENTION

The present invention relates generally to a member for providing sealing, baffling, reinforcement or a combination thereof to an article of manufacture such as a transportation vehicle.

### BACKGROUND OF THE INVENTION

For many years, industry and particularly the transportation industry has been concerned with designing members for providing baffling, sealing, structural reinforcement or the like to articles of manufacture such as transportation vehicles. For example, United States Patent Nos. 5,755,486; 4,901,500; and 4,751,249 describe prior art devices. However, design of such members can be problematic. As one example, the shape or configuration of a structure can cause assembly of a member to that structure to be problematic. As another example, articles of manufacture and particularly transportation vehicles can be subject to a variety of forces and can cause a variety of undesirable noises during operation. In turn, counteraction of those forces and/or noises can require the creation of new and unique reinforcements, seals or baffles, which can be difficult to design. As such, the present invention provides a member that addresses one of the aforementioned problems or difficulties or addresses other problems or difficulties as will become apparent from the following disclosure.

### SUMMARY OF THE INVENTION

The present invention is directed to a member that provides sealing, baffling, reinforcement or a combination thereof to a structure of an article of manufacture such as an automotive vehicle or a relatively large transportation vehicle. The member includes a carrier member, which typically has at least one attachment although not required. An activatable material is disposed upon the carrier member and the activatable material can typically be activated to flow, cure, expand or a combination thereof to preferably adhere the member to the structure of the article of manufacture. In one preferred embodiment, the reinforcement is employed within a closure (e.g., a door) of the transportation vehicle.

### BRIEF DESCRIPTION OF THE DRAWINGS

The features and inventive aspects of the present invention will become more apparent upon reading the following detailed description, claims, and drawings, of which the following is a brief description:
Fig. 1 is a side perspective view of a first side of an exemplary member in accordance with an aspect of the present invention.
Fig. 2 is a side perspective view of a second side of the exemplary member of Fig. 1.

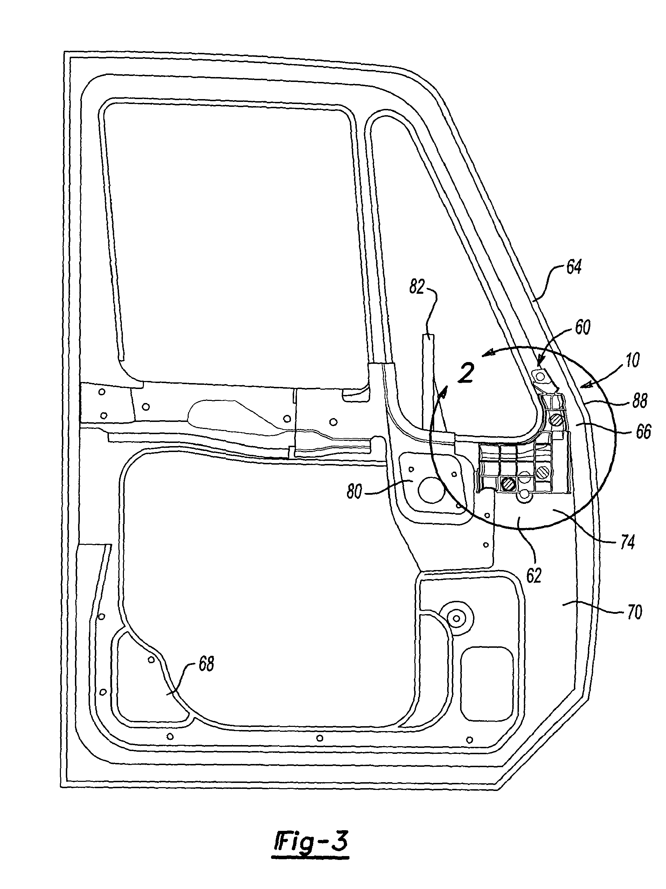

Fig. 3 is perspective view of the exemplary member of Figs. 1 and 2 assembled to a structure of a transportation vehicle in accordance with an aspect of the present invention.

### DETAILED DESCRIPTION OF THE PREFERRED EMBODIMENT

The present invention is predicated upon the provision of a member suitable for providing sealing, baffling, reinforcement or a combination thereof to one or more structures of an article of manufacture. Together, the one or more structures and the member can form a system or assembly that is generally desirable for the article of manufacture because of the functional attributes (e.g., noise reduction, sealing, strength, combinations thereof or the like) provided by the member. It is contemplated that the member may be employed in conjunction with a variety of structures of various articles of manufacture such as boats, trains, buildings, appliances, homes, furniture or the like. It has been found, however, that the member is particularly suitable for application to structures or assemblies of transportation vehicles. Generally, it is contemplated that the member may be applied to various structures such as components of a body, a frame, an engine, a hood, a door, a trunk, a bumper, combinations thereof or the like of a transportation vehicle.

The member typically includes one or more of the following:
i) a carrier member, which typically includes an outer surface and one or more ribs or rib structures, although not required;
ii) an activatable material disposed upon or adjacent the outer surface of the carrier members;
iii) optionally, one or more attachments for assisting in attaching or assembling the member to a structure of an article of manufacture; and
iv) optionally, one or more openings (e.g., cavities, through-holes or the like) for allowing passage of objects therethrough.

As used for the present invention, the term activatable material is intended to mean a material that can be activated to cure, expand (e.g., foam), soften, flow or a combination thereof. Thus, it is contemplated for the present invention that an activatable material may be activated to perform only one of aforementioned activities or any combination of the aforementioned activities unless otherwise stated.

Generally, it is contemplated that the member of present invention may provide any of sealing, baffling, reinforcement, combinations thereof or the like to a structure of an article of manufacture. It has been found, however, that the member is particularly useful for providing reinforcement to structures of articles of manufacture and particularly to transportation vehicles. The member may be employed to reinforce a structure against a variety of forces which may be provided from a variety of sources such as forces provided by a vehicle impacts with another object, forces and vibrations caused by terrain conditions across which a vehicle may be traveling or the like. In one particular, embodiment, the member is employed for counteracting forces created by air resistance upon a component of the vehicle particularly during motion or operation of the vehicle. Typically, such a component will extend outwardly from the vehicle, although not required. One exemplary component, which can place such forces upon a door of a transportation vehicle (e.g. a truck) during use of that vehicle is a mirror assembly.

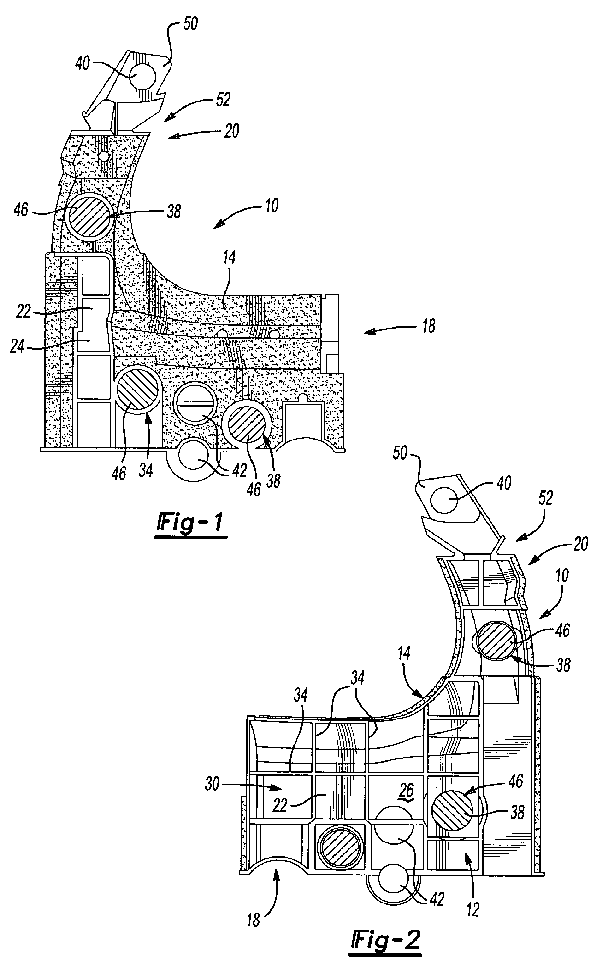

Referring to Figs. 1-2, there is illustrated one exemplary member 10 according to the present invention for providing sealing, baffling, reinforcement, combinations thereof or the like to one or more structures of an article of manufacture and particularly to structures of a transportation vehicle. The member 10 includes a carrier member 12 and an activatable material 14.

Generally, the carrier member could be shaped in a variety of configurations. In the embodiment shown, the carrier member 12 includes a first or base portion 18 and a second or neck portion 20 extending therefrom. The base portion 18 is illustrated as being generally rectangular and the neck portion 20 extends outwardly (e.g., upwardly) from a corner region of the base portion 18.

Generally, the carrier member 12 (e.g., including the base and neck portions) has a shell shaped wall 22 with an exterior substantially convex surface 24 opposite an interior substantially concave surface 26. The interior concave surface 26 substantially defines a cavity 30 and a plurality of intersecting ribs 34 are located in the cavity 30 at the base portion 18, the neck portion 20 or both. As shown, the ribs 34 could be described as extending laterally and longitudinally to intersect, horizontally and vertically to intersect or a combination thereof.

The activatable or expandable material 14 may be disposed upon the carrier member 12 in a variety of configurations. It could be disposed upon a member that is attached to the carrier member or may be directly disposed upon the carrier member 12. In the embodiment illustrated, the activatable material is directly disposed upon and typically adhered to the exterior surface 24 of the carrier member 12 and, as shown, the activatable material covers a substantial portion (e.g., at least 40%, 60%, 80% or more) of the surface area of the exterior surface 24.

The member 10 typically includes one or a plurality of openings (e.g., cavities or through-holes) defined in the carrier member 12 the activatable material 14 or both. In the particular embodiment illustrated, the carrier member 12 includes six openings 38, 40, 42 shown as through-holes extending through various regions of the carrier member 12.

In a preferred embodiment, the carrier member 12 includes at least one (e.g., one, two, three or more) through-holes 38 associated with at least one (e.g. one, two, three or more) attachments 46. In the particular embodiment shown, one of those through-holes 38 extends through the carrier member 12, the expandable material 14 or both at the neck portion 20 of the carrier member 12 and at least one (e.g., two) of those through-holes 38 extends through the carrier member 12, the expandable material 14 or both at the base portion 18.

It is contemplated that the attachments 46 could be supplied in a variety of configurations such as interference fitting fasteners (e.g., arrowhead or bulb type fasteners or push-pins which may be formed of plastic, mylar, metal or other materials), adhesive fasteners, magnetic fasteners, combinations thereof or the like. In the illustrated embodiment, the attachments 46 are illustrated as metal (e.g., aluminum, steel (e.g., G60 galavanized steel), magnesium, iron, combinations thereof or the like) members that are located at least partially within or directly adjacent the openings 38. The attachments 46 are shown as being substantially planar and circular or disc-shaped. The attachments 46 are also shown as substantially spanning the entirety or adjacent the entirety of the through-holes 38 and the attachments 46 are shown as being accessible from either side of the carrier member 12. It is additionally contemplated that one or more of the attachments 46 may be removed such that its corresponding opening 38 could remain open as a clearance hole or other opening (e.g., for accommodating and/or receiving components of the article of manufacture).

Also included in the illustrated embodiment, at least one of the through-holes 40 extends through an extension 50 that extends outwardly from a distal end 52 of the neck portion 20 of the carrier member 12. Moreover, two other through-holes 42 (typically suitable for passage of compounds therethrough) are shown as extending through the base portion 18 of the carrier member 12.

In one embodiment, a baffling expandable material, which may be any of the expandable materials described herein, may be located upon or adjacent the extension 50 or at another location of the carrier member. In such an embodiment, the baffling expandable material will typically expand as further described below to span a cavity of a structure for inhibiting passage of sound or material through that cavity.

In the embodiment illustrated, the carrier member 12 including the wall 22, the ribs 34 and the extension 50 are all intergrally molded or formed of single material that is different from the expandable material 14. Suitable materials can include for example, and without limitation, metal or a polymeric material (e.g., nylon, polyamide, polyester, polypropylene, polyethylene, molding compound or others) which may be filled or unfilled (e.g., filled with glass or kevlar reinforcement fibers).

It should be understood that the specific shapes, configurations, materials and other specificities of the member of Figs. 1-2, including, without limitation, the activatable materials, the carrier member, the attachments and the openings or through-holes, may be varied within the scope of the present invention, unless otherwise specified. The skilled artisan will be able to derive other shapes, configurations and materials for the members of the present invention while still remaining within the scope of the present invention.

A variety of activatable materials may be used for the member of the present invention. In one embodiment, the activatable or expandable material may be formed of a heat activated material and may flow, cure (e.g., be thermosettable), foam or a combination thereof upon exposure to heat. The activatable material may be generally dry to the touch and substantially non-tacky or may be tacky and, in either situation, may be shaped in any form of desired pattern, placement, or thickness, but is preferably of substantially uniform thickness. Exemplary expandable materials include L-5200, L-5220, L-7102 and L-7220 foams available through L&L Products, Inc. of Romeo, Michigan. Another exemplary expandable material is disclosed in U.S. patent application titled "Expandable Material", Serial No. 10/867,835, filed on June 15, 2004 and incorporated herein by reference for all purposes.

Though other heat-activated materials are possible, a preferred heat activated material is an expandable polymer or plastic, and preferably one that is foamable. Particularly preferred materials are an elastomer-based, an epoxy-based, acrylate-based or acetate-based foams, which may be structural, sealing, baffling, acoustic or a combination thereof. For example, and without limitation, the foam may be an epoxy-based material, including an ethylene copolymer or terpolymer that may possess an alpha-olefin. As a copolymer or terpolymer, the polymer is composed of two or three different monomers, i.e., small molecules with high chemical reactivity that are capable of linking up with similar molecules.

A number of epoxy-based or otherwise based sealing, baffling or acoustic foams are known in the art and may employed in the present invention. A typical foam includes a polymeric base material, such as an epoxy resin or ethylene-based polymer which, when compounded with appropriate ingredients (typically a blowing and curing agent), expands and cures in a reliable and predicable manner upon the application of heat or the occurrence of a particular ambient condition. From a chemical standpoint for a thermally-activated material, the structural foam is usually initially processed as a flowable thermoplastic material before curing. It will cross-link upon curing, which makes the material incapable of further flow.

One advantage of the preferred structural foam materials over prior art materials is that the preferred materials can be processed in several ways. The preferred materials can be processed by injection molding, extrusion, compression molding or with a mini-applicator. This enables the formation and creation of part designs that exceed the capability of most prior art materials.

While preferred materials have been disclosed, other materials may be used as well, particularly materials that are heat-activated or otherwise activated by an ambient condition (e.g. moisture, pressure, time, chemical reaction or the like) and expand and/or cure in a predictable and reliable manner under appropriate conditions for the selected application. Of course, the material may also be formed of non-activatable materials, non-expandable materials or otherwise. Thus, upon activation, the material may soften, cure and expand; soften and cure only; cure only; soften only; or may be non-activatable.

One example of an expandable material is the epoxy based resin disclosed in U.S. Patent No. 6,131,897, the teachings of which are incorporated herein by reference. Some other possible materials include, but are not limited to, polyolefin materials, copolymers and terpolymers with at least one monomer type an alpha-olefin, phenol/formaldehyde materials, phenoxy materials, thermoplastic materials, and polyurethane materials. See also, U.S. Patent Nos. 5,766,719; 5,755,486; 5,575,526; and 5,932,680, (incorporated by reference). In general, the desired characteristics of the material can include relatively high glass transition temperature (typically greater than 70 degrees Celsius), and adhesion durability properties. In this manner, the material does not generally interfere with the materials systems employed by automobile manufacturers.

Other exemplary expandable materials can include combinations of two or more of the following: epoxy resin, polystyrene, styrene butadiene-styrene (SBS) block copolymer, butadiene acrylo-nitrile rubber, amorphous silica, glass microspheres, azodicarbonamide, urea, dicyandiamide. Examples of such materials are sold under the tradename SIKAELASTOMER, SIKAREINFORCER and SIKABAFFLE and are commercially available from the Sika Corporation, Madison Heights, MI.

In applications where the material is a heat activated, thermally expanding material, an important consideration involved with the selection and formulation of the material comprising the foam is the temperature at which a material reaction or expansion, and possibly curing, will take place. Typically, the foam becomes reactive or activated at higher processing temperatures, such as those encountered in an automobile assembly plant, when the foam is processed along with the automobile components at the elevated temperatures or at higher applied energy levels, e.g., during paint, primer or e-coat baking or curing steps. While temperatures encountered in an automobile assembly operation may be in the range of about 148.89° C to 204.44°C (about 300°F to 400°F), body and paint shop applications are commonly about 93.33°C (about 200°F) or higher. If needed, blowing agent activators can be incorporated into the composition to cause expansion at different temperatures outside the above ranges. Generally, suitable expandable foams have a volumetric range of expansion ranging from approximately 0 to over 1000 percent (e.g., volumetric expansion of greater than 50%, 100%, 200% or 500% of the original unexpanded volume of the material).

The material or medium may be at least partially coated with an active polymer having damping characteristics or other heat activated polymer, (e.g., a formable hot melt adhesive based polymer or an expandable structural foam, examples of which include olefinic polymers, vinyl polymers, thermoplastic rubber-containing polymers, epoxies, urethanes or the like) placed along the mold through the use of baffle technology; a die-cast application according to teachings that are well known in the art; pumpable application systems which could include the use of a baffle and bladder system; and sprayable applications.

### Formation

Depending upon the material used for the carrier member 12, several different forming techniques may be employed to shape the member 12. For example, stamping, extrusion, molding or other techniques may be used. As such, the attachments 46, when present, can be formed or integrated with the carrier member 12 in several different ways as well. As one example, the attachments 46 may be integrally molded or otherwise formed of the same or a different material than the carrier member 12.

In the illustrated embodiment, the carrier member 12 is molded (e.g., injection molded) so that a portion such as a surface, an extension or, as shown, a peripheral edge of the attachments 46 is substantially encased in the material of the carrier member 12. In the embodiment, it is contemplated that the attachments 46 be placed in a mold of a molding machine (e.g., an injection molding machine) and the material of the carrier member 12 can be molded to shape while also encasing the portion (e.g., the peripheral edge) of the attachments 46.

The activatable material 14, as discussed, can also be processed in multiple different ways. As such, the activatable material 14 may be applied to the carrier member 12 using a variety of techniques for forming the member 10. In one exemplary preferred embodiment, the carrier member 12 is placed as an insert into a mold of an injection molding machine and the activatable material is insert injection molded into place such that it adheres to the carrier member 12. In another preferred exemplary embodiment, the member 10 is formed by two shot injection molding wherein injection a first shot of material forms the carrier member 12 and injection molding a second shot of material forms and/or applies the activatable material 14 and positions the activatable material 14 relative to the carrier 12. It is also contemplated that the attachments 46 may be molded in place or otherwise integrated with the activatable material 14.

### Application

A member according to the present invention may be applied to a variety of locations upon a variety of articles of manufacture. Generally, a member in accordance with the present invention is quite suitable for application to a structure defining an internal cavity. In such a circumstance, the member can be located within the cavity of the structure for providing sealing, baffling or reinforcement to the structure.

The attachments of the present invention, when used, may be employed to at least temporarily attach the member to a structure and such attachment will depend upon the structure to which the member is applied and/or the type of attachment used. For example, many interference fit type attachments will include a portion (e.g., a larger or bulbous portion or an arrow shaped tip portion), which can be inserted into an opening (e.g., through-hole) of a structure such that the attachment attaches to the structure for at least temporarily attaching the member in a cavity of the structure.

In the illustrated embodiment, the member 10 is placed in a cavity 60 of a structure 62 of an article of manufacture, which is shown as a first or forward pillar portion or structure 64 and upper forward portion 66 of a main body 68 of a closure panel or door 70 of a transportation vehicle. Upon location of the member 10 in the cavity 60, the attachments 46 are preferably adjacent or contacting a surface of the structure 62. Thereafter, the metal attachments 46 are welded (e.g., electrical resistance, heat, vibration or otherwise welded) to the structure 62 with, for example, a weld gun or other instrument.

Once properly located relative to the structure to be reinforced, the activatable material 14 is activated to flow, expand, cure or a combination thereof. During such activation, the activatable material typically adheres to one or more walls or surfaces 74 of the structure 62 defining the cavity 60. In turn, the member 10 can provide baffling, sealing, reinforcement or a combination thereof to the structure 62. As suggested earlier, such reinforcement, baffling or sealing can be provided in a variety of locations and can reduce multiple different noises, provide stability against multiple different forces and provide sealing against multiple different fluids.

In the embodiment illustrated, the member 10 is particularly adept at providing reinforcement to the forward structure 62 of the door 70 of the transportation vehicle. As can be seen, the door 70, include a mounting structure 80 to which a component such as a mirror assembly 82 and/or light assembly (e.g., spot-light mounting bracket) is typically attached. As shown, the member 10 is located adjacent and more particularly, just forward of the mounting structure 80. During use of the transportation vehicle, air will typically exert a force against the mirror assembly 82 and that mirror assembly 82, in turn, places a force upon the mounting structure 80, the reinforced structure 62 or both. Such force can undesirably tend to bias the structure 62 and particularly a front edge 88 of the structure 62 of the door 70 away from the vehicle, which, in turn, can cause undesirable noise (e.g., from wind flowing by the front edge 88), fatigue (e.g., fatigue cause by the bending of the door metal) or other undesirable effects. Advantageously, however, the member 10 provides reinforcement to the structure 62, the mounting structure 80 or both against such force and can at least partially counter the outward biasing of the front edge 88 of the structure 62.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A door assembly of a transportation vehicle, the assembly comprising:
a structure of a side door of the transportation vehicle, the structure being a forward portion of the door that defines an internal cavity;
a reinforcement member in the cavity of the structure, the reinforcement member including:
i) a carrier member;
ii) a material adhered to the carrier member and walls of the structure defining the cavity.

2. A door assembly as in claim 1 further comprising a component of the transportation vehicle extending outwardly from the vehicle wherein, during use of the vehicle, the reinforcement reinforces the structure against one or more forces caused by air pushing against the component.

3. A door assembly as in claim 2 wherein the component is a mirror assembly or spot-light mounting bracket.

4. A door assembly as in claim 1, 2 or 3 wherein the carrier member includes a base portion and a neck portion extending therefrom.

5. A door assembly as in claim 1, 2, 3 or 4 wherein the carrier member includes ribs that extend laterally and longitudinally to intersect, extend horizontally and vertically to intersect or a combination thereof.

6. A door assembly as in claim 1, 2, 3, 4 or 5 wherein the carrier member has at least one opening and one or more metal attachments are connected to the carrier member, the attachments being substantially planar and located at least partially within the at least one opening.

7. A door assembly as in claim 6 wherein a portion of each of the one or more attachments is substantially encased by the material of the carrier member.

8. A door assembly as in claim 7 wherein the portion of each of the one or more attachments is a peripheral edge thereof.

9. A door assembly as in any of claims 1-8 wherein the carrier member is formed of a polymeric material and the material adhered to the carrier member and the structure is a thermoset foam.

10. A door assembly as in any of claims 1-9 wherein the transportation vehicle is a large truck.
